# EUROPEAN PATENT APPLICATION

(11) **EP 4 632 832 A1**
(43) Date of publication of application: **15.10.2025**
(21) Application number: 24864141.7
(22) Date of filing: 07.06.2024
(51) Int. Cl.: H01M 4/13, H01M 50/593, H01M 50/586

(54) **ELECTRODE SHEET, NEGATIVE ELECTRODE SHEET, ELECTRODE ASSEMBLY, AND LITHIUM-ION BATTERY**

(30) Priority: 15.09.2023 CN 202322526600 U; 15.09.2023 CN 202311200028; 15.09.2023 CN 202322529053 U
(71) Applicant: HUIZHOU EVE POWER CO., LTD, Huizhou, Guangdong 516039 (CN); Eve Power Co., Ltd., Jingmen, Hubei 448000 (CN)
(72) Inventor: ZHOU, Lin, Huizhou, Guangdong 516039 (CN); WANG, Chao, Huizhou, Guangdong 516039 (CN); ZENG, Hanmin, Huizhou, Guangdong 516039 (CN); HE, Wei, Huizhou, Guangdong 516039 (CN); LIU, Jincheng, Huizhou, Guangdong 516039 (CN)
(74) Representative: Berggren Oy
(86) International application number: PCT/CN2024/098171
(87) International publication number: WO 2025/055416

(57) **Abstract**

Disclosed are an electrode sheet, a negative electrode sheet, an electrode assembly, and a lithium ion battery, relating to the field of battery technologies. The electrode sheet includes a current collector and an active material layer. The current collector includes a coating area, as well as a tab area and a non-tab area respectively disposed on opposite sides of the coating area. The active material layer is disposed on the coating area. The non-tab area is coated with an insulation coating layer. in addition, an electrode assembly including the electrode sheet and a lithium-ion battery using the electrode assembly are also provided.

## Description

This application claims priority to Chinese Patent Application No. 202322526600.9 filed on September 15, 2023, Chinese Patent Application No. 202311200028.5 filed on September 15, 2023, and Chinese Patent Application No. 202322529053.X filed on September 15, 2023, the entire contents of which are incorporated herein by reference.

### TECHNICAL FIELD

The present disclosure relates to batteries, and more particularly, to an electrode sheet, a negative electrode sheet, an electrode assembly, and a lithium ion battery.

### BACKGROUND

During operation of a battery, battery electrode sheets may be swelled. Further, the negative electrode sheet generally has a greater swelling degree than the positive electrode sheet. The swelling of the negative electrode sheet causes the thickness and width thereof to change, so that an edge of the electrode sheet may puncture the separator and directly contact with the positive electrode sheet due to the change in volume, leading to short circuit, or even fire and explosion.

### SUMMARY

Therefore, in the battery technology, there is a need to provide a solution to avoid the contact and short circuit between the negative electrode sheet and the positive electrode sheet due to the swelling of the negative electrode sheet, thereby improving the safety of the battery.

According to a first aspect, the present disclosure provides an electrode sheet including:
a current collector including a coating area, as well as a tab area and a non-tab area disposed at opposite sides of the coating area; and
an active material layer disposed on the coating area;
wherein an insulation coating layer is disposed on the non-tab area.

According to a second aspect, the present disclosure provides a negative electrode sheet including:
a negative current collector including a negative coating area and a negative electrode tab disposed a side of the negative coating area, and;
a negative active material layer disposed on the negative coating area;
wherein an insulation coating layer is disposed on a side of the negative active material layer away from the negative current collector.

Alternatively, a non-tab area is disposed at a side of the negative current collector away from the non-tab area, and at least one insulation coating layer is disposed on the non-tab area and the side of the negative active material layer away from the negative current collector.

According to a third aspect, the present disclosure provides an electrode assembly including a positive electrode sheet, a separator, and a negative electrode sheet. The positive electrode sheet and the negative electrode sheet are disposed on opposite sides and of the separator. The negative electrode sheet is the electrode sheet according to the first aspect as described above.

According to a fourth aspect, the present disclosure provides an electrode assembly including a positive electrode sheet, a separator, and a negative electrode sheet according to the second aspect. The positive electrode sheet and the negative electrode sheet are disposed on opposite sides of the separator.

According to a fifth aspect, the present disclosure provides a lithium ion battery including the electrode assembly of according to the third aspect or the fourth aspect.

### Beneficial Effects

According to the present application, the insulation coating layer is provided on the non-tab area of the negative electrode sheet, to avoid the contact and short circuit between the negative electrode sheet and the positive electrode sheet due to the swelling of the negative electrode sheet, thereby improving the safety of the battery.

### BRIEF DESCRIPTION OF THE DRAWINGS

In order to clearly illustrate the embodiments of the present disclosure, the accompanying drawings for the description of the embodiments will be introduced briefly. It will be apparent that the accompanying drawings described below illustrate some embodiments of the present disclosure, and other drawings may be made to those skilled in the art without involving any inventive effort.
FIG. 1 is a cross-sectional view of a first structure of an electrode sheet according to some embodiments of the present disclosure.
FIG. 2 is a side view of a first structure of an electrode sheet according to some embodiments of the present disclosure.
FIG. 3 is a cross-sectional view of a second structure of an electrode sheet according to some embodiments of the present disclosure.
FIG. 4 is a side view of a second structure of an electrode sheet according to some embodiments of the present disclosure.
FIG. 5 is a cross-sectional view of a third structure of an electrode sheet according to some embodiments of the present disclosure.
FIG. 6 is a side view of a third structure of an electrode sheet according to some embodiments of the present disclosure.
FIG. 7 is a schematic diagram of an electrode assembly according to some embodiments of the present disclosure.
FIG. 8 is a cross-sectional view of a first structure of a negative electrode sheet according to some embodiments of the present disclosure.
FIG. 9 is a side view of a first structure of a negative electrode sheet according to some embodiments of the present disclosure.
FIG. 10 is a cross-sectional view of a second structure of a negative electrode sheet according to some embodiments of the present disclosure.
FIG. 11 is a side view of a second structure of a negative electrode sheet according to some embodiments of the present disclosure.
FIG. 12 is a cross-sectional view of a third structure of a negative electrode sheet according to some embodiments of the present disclosure.
FIG. 13 is a side view of a third structure of a negative electrode sheet according to some embodiments of the present disclosure.
FIG. 14 is a schematic diagram of a fourth structure of a negative electrode sheet according to some embodiments of the present disclosure.
FIG. 15 is a schematic diagram of a fifth structure of a negative electrode sheet according to some embodiments of the present disclosure.
FIG. 16 is a schematic diagram of a sixth structure of a negative electrode sheet according to some embodiments of the present disclosure.
FIG. 17 is a schematic diagram of a seventh structure of a negative electrode sheet according to some embodiments of the present disclosure.
FIG. 18 is a schematic diagram of an eighth structure of a negative electrode sheet according to some embodiments of the present disclosure.
FIG. 19 is a schematic diagram of an electrode assembly according to some embodiments of the present disclosure.

### List of reference numerals:

100. Electrode sheet; 110. Current collector; 111, Tab area; 112. Coating area; 113. Non-tab area; 120. Active material layer; 130. Insulation coating layer; 131. First insulation layer; 132. Second insulation layer; 200. Positive electrode sheet; 210. Positive electrode tab; 220. Positive coating area; 230. Positive active material layer; 300. Separator;
1000. Negative electrode sheet; 1100. Negative current collector; 1110. Negative electrode tab; 1120. Negative coating area; 1200. Negative active material layer; 133. Third insulation layer; 134. Fourth insulation layer; 135. Fifth insulation layer; 136. Sixth insulation layer; 137. Seventh insulation layer; 138. Eighth insulation layer; 139. Ninth insulation layer; 1310. Tenth insulation layer; 1311. Eleventh insulation layer.

### DETAILED DESCRIPTION

Embodiments of the present disclosure provide an electrode sheet 100, which can be used as a positive or negative electrode sheet in a battery. At present, the negative electrode sheet generally has a swelling in operation great than that of the positive electrode sheet. When the electrode sheet 100 acts as the negative electrode sheet in the battery, the swelling and protruding can be addressed to avoid contact and short-circuit with the positive electrode sheet.

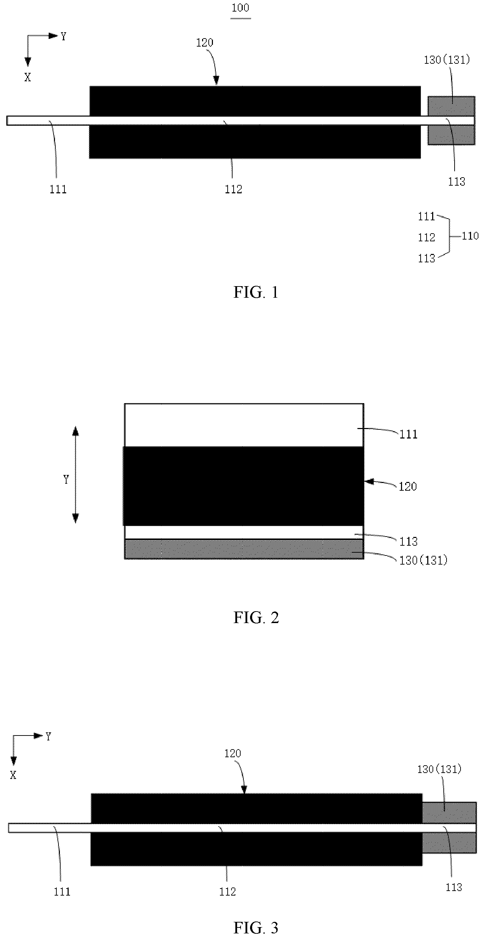

Referring to FIGs. 1 and 2, in some embodiments, the electrode sheet 100 includes a current collector 110 and one or more active material layers 120 disposed on the current collector 110. The current collector 110 is divided into a coating area 112 at a middle portion, as well as a tab area 111 and a non-tab area 113 disposed on opposite sides of the coating area 112.

In some embodiments, the active material layers 120 are uniformly disposed on opposite sides of the current collector 110 along a first direction X, and the tab area 111 and the non-tab area 113 are disposed at opposite ends of the current collector 110 along a second direction Y. The tab area 111 and the non-tab area 113 of the current collector 110 are not covered by the active material layers 120. The tab area 111 of current collector 110 forms a tab of the electrode sheet 100.

It is to be noted that when the electrode sheet 100 is used as the positive electrode sheet, a material of the current collector 110 includes aluminum, and a material of each active material layer 120 includes lithium cobalt oxide, lithium iron phosphate, lithium manganate, or a ternary lithium metal composite oxide. When the electrode sheet 100 is used as the negative electrode sheet, a material of the current collector 110 includes copper, and a material of each active material layer 120 includes carbon, silicon, or the like. Specific materials can be selected as needed, which is not limited thereto.

The first direction X refers to a thickness direction of the electrode sheet 100, and the second direction Y refers to a direction perpendicular to the first direction X, which is also a width direction of the electrode sheet 100.

In the embodiments, an insulation coating layer 130 is disposed on the non-tab area 113 of the electrode sheet 100 to avoid contact and short-circuit between the positive electrode sheet and the negative electrode sheet during the use of the battery. In practical application, when the electrode sheet 100 is swelled, the insulation coating layer 130 can provide insulating protection to the electrode sheet 100, so as to avoid direct contact and short circuit with the corresponding positive electrode sheet or negative electrode sheet.

Referring to FIGs. 1 and 2, in some embodiments, the insulation coating layer 130 includes one or more first insulation layers 131. For example, the first insulation layers 131 are uniformly disposed on opposite sides of the non-tab area 113 along the thickness direction of the current collector 110. A preset gap is provided between each first insulation layer 131 and each active material layer 120, so that a blank area is formed between the first insulation layer 131 and the active material layer 120. The preset gap can prevent a material of the first insulation layer 131 from mixing with the material of the active material layer 120 and avoid the influence on the battery performance. In practical application, a width of the preset gap is not excessively large to avoid the deterioration of the insulation effect due to the small width of the first insulation layers 131. The width of the preset gap is set to be 100 mm or less.

Referring to FIGs. 3 to 4, in another embodiment, no gap is provided between the first insulation layer 131 and the active material layer 120. That is, the first insulation layer 131 is brought into direct contact with the active material layer 120.

In another embodiment, the first insulation layer 131 is uniformly disposed on one side of the non-tab area 113 of the current collector 110 along the thickness direction. The preset gap may be provided between the first insulation layer 131 and the active material layer 120, or no gap is provided so that the first insulation layer 131 and the active material layer 120 abut against each other.

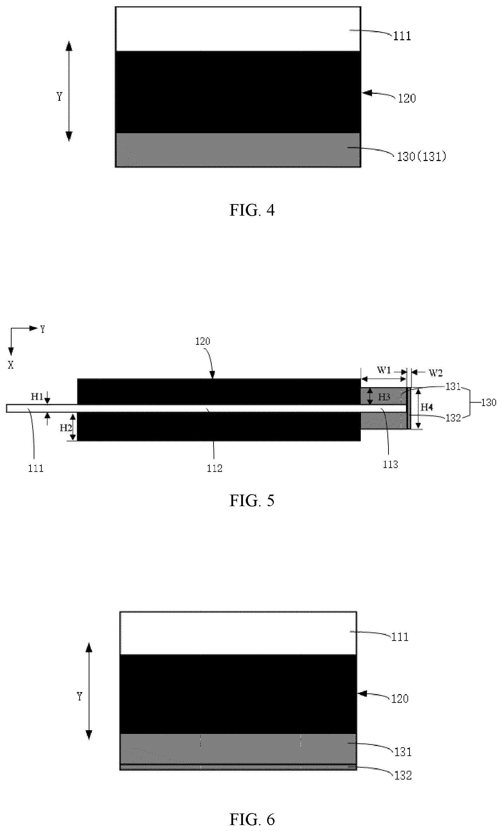

Referring to FIGs. 5 to 6, in some embodiments, the insulation coating layer 130 further includes a second insulation layer 132 disposed on an end of the non-tab area 113 away from the active material layers 120. In this case, the second insulation layer 132 together with the first insulation layers 131 covers a side of the non-tab area 113 away from the active material layers 120. On the one hand, it has a passivation effect on the edge of the non-tab area 113, reducing the risk of the non-tab area puncturing the separator due to swelling and deformation. On the other hand, even if the non-tab area 113 punctures the separator and contacts with the positive electrode tab, the first insulation layers 131 in combination with the second insulation layer 132 can provide sufficient insulation protection to the side of the current collector 110 away from the tab area 111, preventing the occurrence of short circuit.

In the embodiments, the thickness and width of each first insulation layer 131 are H3 and W1, respectively (which are dimensions of the first insulation layer 131 in the first direction X and the second direction Y). In addition, the second insulation layer 132 has a dimension H4 in the first direction X, and a dimension W2 in the second direction Y.

To ensure the insulating protective effect of the insulation coating layer 130, the dimensions satisfy the following: 0.1 µm≤H3≤H2, 0.1 mm≤W1≤100 mm; H1≤H4≤2*H3+H1, or 0.1 µm≤W2≤5000 µm, in which H1 is a thickness of the current collector 110 and H2 is a thickness of the active material layer 120.

The specific dimensions H3, W1, H4 and W2 satisfy the following: 5 µm≤H3≤100 µm, 1 mm≤W1≤100 mm, 6 µm≤H4≤100 µm, or 1 µm≤W2≤100 µm. The thickness H3 of the first insulation layer 131 is controlled to avoid insufficient insulation due to small thickness thereof, and to avoid poor processing performance due to large thickness thereof. Moreover, the thickness H3 of each first insulation layer 131 is set such that it possible to avoid the loss of an electrolyte due to the swelling of the first insulation layer 131, so as to ensure the energy density of the battery.

It is noted that in some embodiments, the insulation coating layer 130 includes only one or more first insulation layers 131. In this case, it is sufficient that the thickness H3 and the width W1 of the first insulation layers 131 satisfy the relevant conditions. In order to ensure the insulation protection effect, the thickness H3 of the first insulation layers 131 is always leas than or equal to the thickness H2 of the active material layers 120 to prevent the electrode sheet from protruding along a thickness direction of the first insulation layers 131, and to avoid wrinkling when the electrode sheet is wound, thereby ensuring the workability and the manufacturing performance thereof. The dimension H4 of the second insulation layer 132 in the first direction X is always greater than or equal to the thickness H1 of the current collector 110, so as to ensure that the second insulation layer 132 can completely cover the surface of the side of the current collector 110 away from the corresponding tab(s).

In the embodiments, the first insulation layers 131 and the second insulation layer 132 are of the same or different materials, which can be determined according to different performance requirements for the first insulation layers 131 and the second insulation layer 132 in use.

For example, in some embodiments, the first insulation layers 131 and the second insulation layer 132 are made of the same material. The material of the insulation coating layer 130 includes an inorganic material, an organic material, and a solvent.

The inorganic material includes at least one of boehmite, alumina, silica, hexagonal boron nitride, cubic boron nitride, silicon carbide, or silicon nitride.

The organic material has a monomer including at least one of vinylidene fluoride, tetrafluoroethylene, hexafluoropropylene, perfluoroethylene, alkyl ethers, ethylene, propylene, 1,3-butadiene, vinyl chloride, styrene, or vinyl acetate. Alternatively, the monomer includes at least one of acrylic acid, acrylate, acrylamide, N-vinylpyrrolidone, acrylonitrile, maleic acid, itaconic acid, maleimide, or bismaleimide. Alternatively, the monomer includes at least one of alkyd resins, epoxy resins, polyurethane, silicone resins, polyamide, polyarylamide, polyethylene terephthalate, polybutylene terephthalate, polyphenylene sulfide, polyphenylsulfone, polyethersulfone, polyetheretherketone, polyimide, polyamide-imide, polyetherimide, or polyester-imide. Alternatively, the monomer includes at least one of polyimide, polyamide-imide, polyetherimide or polyester-imide, polyvinylidene fluoride or polytetrafluoroethylene. The organic material has a weight average molecular weight of 20,000 to 1,000,000.

The solvent is a water-based solvent, such as deionized water, or an oil-based solvent, such as N-methylpyrrolidone (NMP), which is not limited thereto.

In the present disclosure, the electrode sheet 100 may be used as a negative electrode sheet or a positive electrode sheet. For example, when the electrode sheet 100 is used as the negative electrode sheet and is swelled and protruded, the insulation coating layer 130 of the negative electrode sheet can be in contact with the positive electrode sheet, thereby avoiding the short circuit between the negative electrode sheet and the positive electrode sheet, and improving the safety of the battery.

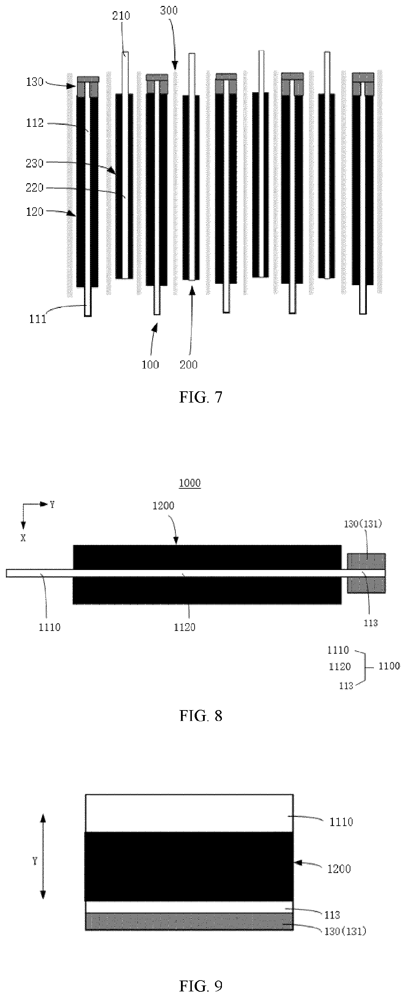

Referring to FIG. 7, embodiments of the present disclosure provide an electrode assembly including positive electrode sheets 200, separators 300, and negative electrode sheets. In the electrode assembly, each negative electrode sheet is the electrode sheet 100 described above. Hereinafter, for ease of description and understanding, the term "negative electrode sheet" refers to the electrode sheet 100.

The electrode assembly is a component of a battery in which chemical reactions occur. The electrode assembly is generally formed by winding and stacking the positive electrode sheets 200 and the negative electrode sheets, and providing the separators 300 between the positive electrode sheets 200 and the negative electrode sheets. A positive coating area 220 is provided on each positive electrode sheet 200, and a negative coating area (corresponding to the coating area 112 of the electrode sheet 100) is correspondingly provided on each negative electrode sheet. The positive coating area 220 and the negative coating area are coated with a positive active material layer 230 and a negative active material layer (corresponding to the active material layer 120 on the electrode sheet 100), respectively. A portion of the positive electrode sheet 200 on which the positive active material layer 230 is provided and a portion of the negative electrode sheet on which the negative active material layer is provided constitute a main body of the electrode assembly. A portion of the positive electrode sheet 200 which is free of the positive active material and a portion of the negative electrode sheet which is free of the negative active material layer are each provided with a tab, i.e. a positive electrode tab 210 and a negative electrode tab (corresponding to the tab area 111 of the electrode sheet 100), respectively. For example, when the negative electrode sheet 100 is used as the negative electrode sheet, the "tab area 111" constitutes the negative electrode tab, and the "non-tab area 113" constitutes a side of the electrode sheet opposite to the negative electrode tab.

Referring to FIG. 7, in some embodiments, the electrode assembly includes a plurality of positive electrode sheets 200 and a plurality of negative electrode sheets, which are alternately provided, as well as separators 300, each of which is provided between any one of the positive electrode sheets 200 and adjacent one of the negative electrode sheets. For example, one positive electrode sheet 200 and one negative electrode sheet adjacent to the one positive electrode sheet 200 are located on opposite sides of one separator 300. Positive electrode tabs 210 and negative electrode tabs are disposed on opposite sides of the electrode assembly.

In the embodiments, in order to avoid the contact and short circuit between the positive electrode sheet 200 and the negative electrode sheet, the width of the separator 300 is greater than or equal to the width of the negative coating area, and the width of the negative coating area is greater than or equal to the width of the positive coating area 220, in which the term "width" refers to the dimension of a corresponding component in the second direction Y.

The insulation coating layer 130 is disposed on the non-tab area 113 of the negative electrode sheet. The insulation coating layer 130 includes the first insulation layer 131 and the second insulation layer 132. The specific arrangements of the first insulation layer 131 and the second insulation layer 132 may refer to the foregoing description, and details are not repeated here. In the electrode assembly, an edge of the first insulation layer 131 close to the negative coating area does not exceed the contact position between the positive coating area 220 and the positive electrode tab 210. That is, the edge of the first insulation layer 131 close to the negative coating area in the second direction Y corresponds to a section of the positive electrode sheet 200 where the positive electrode tab 210 is located, or partly corresponds to or does not correspond to a section where the positive coating area 220 is located.

In this way, when the negative electrode sheet is swelled to puncture the separator 300, it is ensured that the insulation coating layer 130 on the non-tab area 113 is in contact with the positive electrode tab 210, preventing the positive electrode sheet 200 from being in direct contact with the negative electrode sheet, thereby preventing the contact and short circuit between the positive electrode sheet 200 and the negative electrode sheet, and improving safety.

Similarly, an edge of the positive coating area 220 away from the positive electrode tab 210 does not exceed an edge of the negative coating area close to the negative electrode tab. That is, the edge of the positive coating area 220 away from the positive electrode tab 210 corresponds to a section of the negative electrode sheet where the negative coating area is located in the second direction Y, preventing it from extending to a section where the tab area 111 is located.

In this way, when the negative electrode sheet is swelled to puncture the separator 300, the insulation coating layer 130 on the non-tab area 113 is in contact with the positive electrode tab 210, thereby preventing the positive electrode sheet 200 from being in direct contact with the negative electrode sheet, avoiding the contact and short circuit between the positive electrode sheet 200 and the negative electrode sheet, and improving safety.

Embodiments of the present disclosure provide a lithium ion battery including an electrode assembly. By applying the electrode assembly in the lithium ion battery, direct contact between the positive electrode sheet 200 and the negative electrode sheet is avoided in use of the battery, thereby avoiding the contact and short circuit, and improving safety of the battery.

In the embodiments, the lithium ion battery refers to a single physical module that includes one or more battery cells to provide high voltages and capacities. For example, the battery mentioned in the embodiments includes a battery module or a battery pack.

Each battery cell includes an electrode assembly composed of the positive electrode sheets 200, the negative electrode sheets, and the separators 300, and an electrolyte. The battery cells primarily rely on the movement of metal ions between the positive electrode sheets 200 and the negative electrode sheets.

Each positive electrode sheet 200 includes a positive current collector and one or more positive active material layers 230 disposed on the positive current collector. A portion of the positive current collector that is not coated with the positive active material layers 230 protrudes with regard to a portion of the positive current collector that is coated with the positive active material layers 230. The portion of the positive current collector that is not coated with the positive active material layers 230 serves as the positive electrode tab 210. A material of the positive current collector includes aluminum, and a material of the positive active material layers 230 includes lithium cobaltate, lithium iron phosphate, lithium manganate, or a ternary or quaternary positive electrode active material formed of a lithium metal composite oxide having at least nickel (Ni), cobalt (Co), manganese (Mn) and/or aluminum (Al).

Each negative electrode sheet includes a negative current collector and one or more negative active material layers disposed on the negative current collector. A portion of the negative current collector that is not coated with the negative active material layers protrudes with regard to a portion of the negative current collector that is coated with the negative active material layers. The portion of the negative current collector that is not coated with the negative active material layers serves as a negative electrode tab. A material of the negative current collector includes copper, and a material of the negative active material layers includes carbon or silicon.

To ensure that a high current is passed without fusing, a plurality of positive electrode tabs 210 are provided and stacked together, and a plurality of negative electrode tabs are provided and stacked together. A material of the separators 300 includes polypropylene (PP) or polyethylene (PE).

The battery cell further includes a housing, an electrode terminal and an adapter. The electrode assembly and the electrolyte are disposed in the housing, the electrode terminal is disposed on the housing, and the adapter connects the electrode terminal to the tabs of the electrode assembly. An insulating member is disposed between the adapter and the housing to insulate the adapter and the housing. The embodiments do not focus on the specific structure of the battery cell that belongs to the existing technology, which is not repeated herein.

Referring to FIGs. 8 to 9, embodiments of the present disclosure provide a negative electrode sheet 1000 including a negative current collector 1100 and one or more negative active material layers 1200 disposed on the negative current collector 1100. The negative current collector 1100 includes a negative coating area 1120 located at a middle portion thereof, and a negative electrode tab 1110 and a non-tab area 113 disposed on opposite sides of the negative coating area 1120.

In some embodiments, the negative active material layers 1200 are uniformly disposed on opposite sides of the negative current collector 1100 along the first direction X, and the negative electrode tab 1110 and the non-tab area 113 are disposed on opposite sides of the negative current collector 1100 along the second direction Y. The negative electrode tab 1110 and the non-tab area 113 are not covered by the negative active material layers 1200.

It is noted that a material of the negative current collector 1100 includes copper, and a material of the negative active material layers 1200 includes carbon, or silicon, which can be selected as required and is not limited herein.

The first direction X refers to a thickness direction of the negative electrode sheet 1000, and the second direction Y refers to a direction perpendicular to the first direction X, which is also a width direction of the negative electrode sheet 1000.

In order to avoid the contact and short circuit between the positive electrode sheet and the negative electrode sheet in use of the battery, the insulation coating layer 130 is provided on the non-tab area 113 and/or the negative active material layer 1200 of the negative electrode sheet 1000. In practical application, when the negative electrode sheet 1000 is swelled, the insulation coating layer 130 can provide insulating protection to the negative electrode sheet 1000, so as to avoid the direct contact and short circuit with the corresponding positive electrode sheet.

Since the insulation coating layer 130 may be provided on the non-tab area 113 and/or the negative active material layer 1200, the negative electrode sheet 1000 includes at least three structures in practical application: a first structure in which the insulation coating layer 130 is provided only on the non-tab area 113, a second structure in which the insulation coating layer 130 is provided only on the negative active material layer 1200, and a third structure in which the insulation coating layer 130 is provided on both the non-tab area 113 and the negative active material layer 1200. The negative electrode sheet 1000 will be described below in connection with the three structures described above.

The first structure of the negative electrode sheet 1000 (in which the insulation coating layer 130 is provided only on the non-tab area 113) is described as follows:

Referring to FIGs. 8 to 9, in some embodiments, the insulation coating layer 130 includes one or more first insulation layers 131. For example, the first insulation layers 131 are uniformly disposed on opposite sides of the non-tab area 113 of the negative current collector 1100 along the first direction X. The first insulation layers 131 and the negative active material layers 1200 are separated by a preset gap, so that a blank area is formed between the first insulation layers 131 and the negative active material layers 1200. The preset gap can prevent the material of the first insulation layers 131 from mixing with the material of the negative active material layer 1200 and avoid the influence on the battery performance. In practical application, a width of the preset gap is not excessively large to avoid the deterioration of the insulation effect due to the small width of the first insulation layers 131. The width of the preset gap is set to be 100 mm or less.

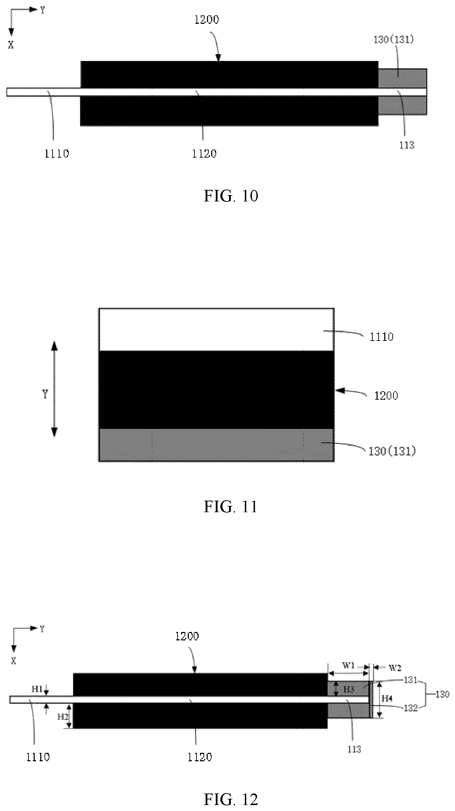

Referring to FIGs. 10 to 11, in another embodiment, no gap is provided between the first insulation layers 131 and the negative active material layers 1200. That is, the first insulation layers 131 are brought into direct contact with the negative active material layers 1200.

In another embodiment, the one or more first insulation layers 131 are uniformly coated on one side of the non-tab area 113 of the negative current collector 1100 along the first direction. The preset gap may be provided between the first insulation layers 131 and the negative active material layers 1200, or no gap is provided so that the first insulation layers 131 and the negative active material layers 1200 abut against each other.

Referring to FIGs. 12 to 13, in some embodiments, the insulation coating layer 130 further includes the second insulation layer 132 disposed on an end of the non-tab area 113 away from the negative active material layer 1200. In this case, the second insulation layer 132 together with the first insulation layers 131 covers the side of the non-tab area 113 away from the negative active material layer 1200. On the one hand, it has a passivation effect on the edge of the non-tab area 113, reducing the risk of the non-tab area puncturing the separator due to swelling and deformation. On the other hand, even if the non-tab area 113 punctures the separator and contacts with the positive electrode tab, the first insulation layers 131 in combination with the second insulation layer 132 can provide sufficient insulation protection to the edge of the negative current collector 1100 away from the negative electrode tab 1110, thereby preventing the short circuit from occurring.

In embodiments with respect to the first structure of negative electrode sheet 1000, the thickness and width of each first insulation layer 131 are H3 and W1, respectively (which are dimensions of the first insulation layer 131 in the first direction X and the second direction Y). In addition, the second insulation layer 132 has a dimension H4 in the first direction X, and a dimension W2 in the second direction Y.

To ensure the insulating protective effect of the insulation coating layer 130, the dimensions satisfy the following: 0.1 µm≤H3≤H2, 0.1 mm≤W1≤100 mm; H1≤H4≤2*H3+H1, or 0.1 µm≤W2≤5000 µm, in which H1 is a thickness of the negative current collector 1100 and H2 is a thickness of the negative active material layer 1200.

The specific dimensions of H3, W1, H4 and W2 satisfy the following: 5 µm≤H3≤100 µm, 1 mm≤W1≤100 mm, 6 µm≤H4≤100 µm, or 1 µm≤W2≤100 µm. The thickness H3 of the first insulation layer 131 is controlled to avoid insufficient insulation due to small thickness thereof, and to avoid poor processing performance due to large thickness thereof. Moreover, the thickness H3 of the first insulation layer 131 is set such that it possible to avoid the loss of an electrolyte due to the swelling of the first insulation layer 131 to ensure the energy density of the battery.

It is noted that in some embodiments, the insulation coating layer 130 includes only the first insulation layers 131. In this case, it is sufficient that the thickness H3 and the width W1 of each first insulation layer 131 satisfy the relevant conditions. In order to ensure the insulation protection effect, the thickness H3 of the first insulation layer 131 is always less than or equal to the thickness H2 of the negative active material layer 1200 to prevent the negative electrode sheet 1000 from protruding along the thickness direction of the first insulation layer 131, and to avoid wrinkling when the negative electrode sheet 1000 is wound, thereby ensuring the workability and the manufacturing performance thereof. The dimension H4 of the second insulation layer 132 in the first direction X is always greater than or equal to the thickness H1 of the negative current collector 1100 so as to ensure that the second insulation layer 132 can completely cover the surface of the side of the negative current collector 1100 away from the corresponding tab(s).

The embodiments merely exemplarily describe the first structure of the negative electrode sheet 1000, and other arrangements or any combination thereof can also be included, which are not be limited here.

The second structure of the negative electrode sheet 1000 (in which the insulation coating layer 130 is provided only on the negative active material layers 1200) is described as follows:

When the insulation coating layer 130 is provided only on the negative active material layers 1200, it is difficult for the insulation coating layer 130 to protect the non-tab area 113. In this case, the non-tab area 113 can be eliminated, and a side of the negative current collector 1100 away from the negative electrode tab 1110 is entirely coated with the negative active material layers 1200. In the following description of the second structure of the negative electrode sheet 1000, the case in which the non-tab area 113 is eliminated is illustrated. However, it is understood that whether the non-tab area 113 is eliminated or not may not affect the effectiveness of the protective effect of the insulation coating layer 130, but may only affect the degree of actual protective effect that can be achieved.

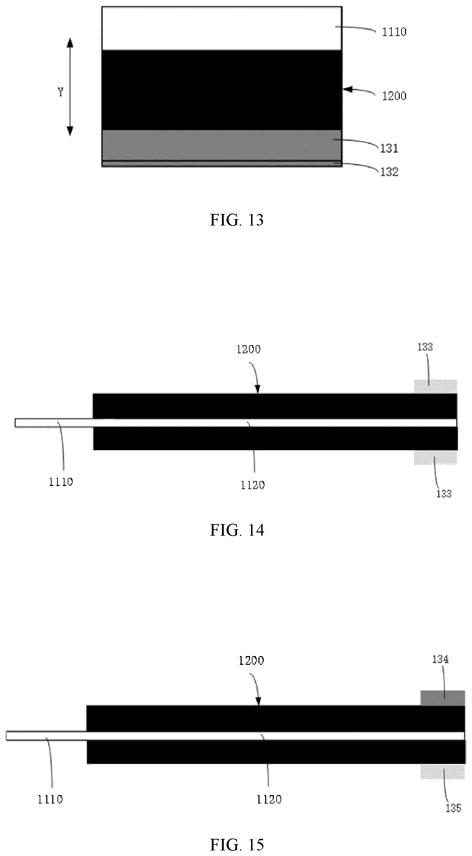

Referring to FIG. 14, in some embodiments, the insulation coating layer 130 is entirely disposed on a side of the negative active material layers 1200 away from the negative electrode tab 1110. The insulation coating layer 130 includes two third insulation layers 133 disposed on opposite sides of the negative active material layer 1200 a. The two third insulation layers 133 are made of the same insulating material.

Each third insulation layer 133 has a length S1 and a width L1, and the thicknesses of the two third insulation layer 133 are d1 and d2, respectively, in which S1, L1, d1, and d2 satisfy the following: S1≤S; 0.1 mm≤L1≤50 mm; 10 mm≤d1≤500 mm, 10 mm≤d2≤500 mm, 0<d1: and d2≤1, in which S is a length of the negative electrode sheet 1000 (i.e., the dimension of the negative electrode sheet 1000 in a winding direction thereof).

The length, width and thickness of the third insulation layer 133 may be flexibly optimized as required. For example, in practical application, the width of the third insulation layer 133 is 1 mm, 5 mm, 10 mm, 20 mm, 40 mm, or other values, and the thickness of the third insulation layer 133 is 10 mm, 30 mm, 50 mm, 100 mm, 200 mm, or 300 mm, or other values, which are not limited thereto. The two third insulation layers 133 may have the same or different size parameters. For ease of processing, the two third insulation layers 133 have the same size parameters.

In the embodiments, the size parameters of the third insulation layer 133 are controlled so that it can ensure the insulating performance of the third insulation layer 133, prevent the third insulation layer 133 from affecting the processing performance of the electrode sheet, and avoid the loss of the electrolyte due to the swelling of the third insulation layer 133 to ensure the energy density of the battery. Hereinafter, the purpose of controlling the size parameters of each insulation coating layer is the same and will not be exhaustively listed.

Referring to FIG. 15, in another embodiment, the insulation coating layer 130 includes a fourth insulation layer 134 and a fifth insulation layer 135, which are disposed on opposite sides of the negative current collector 1100. The fourth insulation layer 134 and the fifth insulation layer 135 have different insulating materials.

Each of the fourth insulation layer 134 and the fifth insulation layer 135 has a length S1 and a width L1, and the thicknesses of the fourth insulation layer 134 and the fifth insulation layer 135 are d1 and d2, respectively, in which S1, L1, d1, and d2 satisfy the following: S1≤S; 0.1 mm≤L1≤50 mm; 10 mm≤d1≤500 mm, 10 mm≤d2≤500 mm, 0<d1: and d2≤1, in which S is the length of the negative electrode sheet 1000 (i.e., the dimension of the negative electrode sheet 1000 in the winding direction thereof).

The length, width and thickness of the fourth insulation layer 134 and the fifth insulation layer 135 may be flexibly optimized as required. For example, the width of the fourth insulation layer 134 is 1 mm, 5 mm, 10 mm, 20 mm, 40 mm, or other values, and the thickness of the fourth insulation layer 134 is 10 mm, 30 mm, 50 mm, 100 mm, 200 mm, or 300 mm, or other values, which are not limited thereto. The fourth insulation layer 134 and the fifth insulation layer 135 may have the same or different size parameters. For ease of processing, the two have the same size parameters.

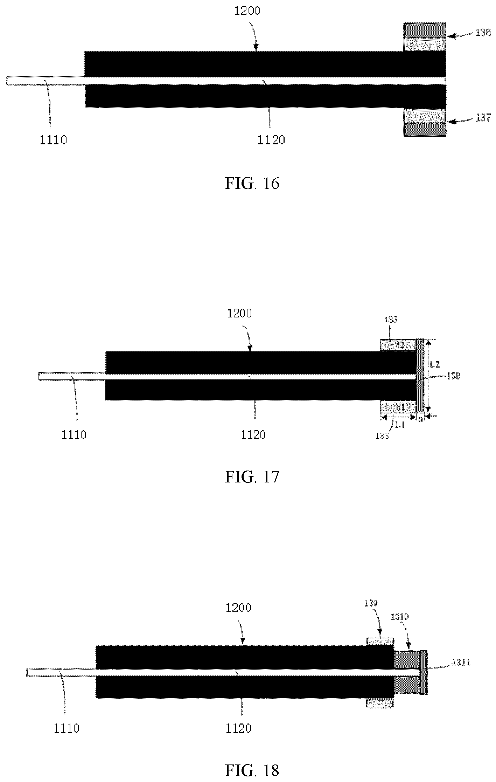

Referring to FIG. 16, in another embodiment, the insulation coating layer 130 includes a sixth insulation layer 136 and a seventh insulation layer 137 disposed on opposite sides of the negative current collector 1100. Each of the sixth insulation layer 136 and the seventh insulation layer 137 comprises at least two different insulating material layers.

Each of the sixth insulation layer 136 and the seventh insulation layer 137 has a length S1 and a width L1, and the thicknesses of the sixth insulation layer 136 and the seventh insulation layer 137 are d1 and d2, respectively, in which S1, L1, d1, and d2 satisfy the following: S1≤S; 0.1 mm≤L1≤50 mm; 10 mm≤d1≤500 mm, 10 mm≤d2≤500 mm, 0<d1: and d2≤1, in which S is the length of the negative electrode sheet 1000 (i.e., the dimension of the negative electrode sheet 1000 in the winding direction thereof).

It is to be noted that the sixth insulation layer 136 and the seventh insulation layer 137 are formed by stacking multiple insulating material layers, so that the thickness thereof is the sum of the thicknesses of the stacked insulating material layers.

The length, width and thickness of the sixth insulation layer 136 and the seventh insulation layer 137 can be flexibly optimized as required. For example, the width of the sixth insulation layer 136 is 1 mm, 5 mm, 10 mm, 20 mm, 40 mm, or other values, and the thickness of the sixth insulation layer 136 is 10 mm, 30 mm, 50 mm, 100 mm, 200 mm, 300 mm, or other values, which are not limited thereto. The sixth insulation layer 136 and the seventh insulation layer 137 have the same or different size parameters. For ease of processing, the sixth insulation layer 136 and the seventh insulation layer 137 have the same size parameters.

In another embodiment, the insulation coating layer 130 includes an eighth insulation layer 138 disposed on a side surface of the negative electrode sheet 1000 away from the negative electrode tab 1110. It is to be understood that the eighth insulation layer 138 may be provided in the respective embodiments of the second structure of the negative electrode sheet 1000.

For example, referring to FIG. 17, in one embodiment, the insulation coating layer 130 includes the eighth insulation layer 138 and two third insulation layers 133. The two third insulation layers 133 are disposed on the opposite sides of the negative active material layer 1200, and the eighth insulation layer 138 is disposed on the side surface of the negative electrode sheet 1000 away from the negative electrode tab 1110, so that the eighth insulation layer 138, in combination with the two third insulation layers 133, can cover the side of the negative electrode sheet 1000 away from the negative electrode tab 1110, thereby ensuring the insulation protection effect.

The length of each third insulation layer 133 and the eighth insulation layer 138 is S1. The width of the third insulation layer 133 is L1, and the thickness thereof is d. The width of the eighth insulation layer 138 is L2 (that is, the dimension of the eighth insulation layer 138 in the thickness direction of the negative electrode sheet 1000), and the thickness thereof is n. S1, L1, d, L2, and n satisfy the following: S1≤S; 0.1 mm≤L1≤50 mm; 10 mm≤d≤500 mm; D≤L2≤700 mm, 10 mm≤n≤500 mm, in which S is the length of the negative electrode sheet 1000 (i.e., the dimension of the negative electrode sheet 1000 in the winding direction thereof), and D is the thickness of the negative electrode sheet 1000.

The width of the eighth insulation layer 138 is set such that it can completely cover the side surface of the electrode sheet away from the negative electrode tab 1110, and the thickness of the eighth insulation layer 138 can be flexibly and optimally designed as required while ensuring insulation performance. For example, the thickness of the eighth insulation layer 138 is 10 mm, 15 mm, 20 mm, 30 mm, 40 mm, or 50 mm, which is not limited thereto.

It is to be understood that the eighth insulation layer 138 may also be provided in conjunction with the fourth insulation layer 134, the fifth insulation layer 135, the sixth insulation layer 136, or the seventh insulation layer 137 to form different structures of the negative electrode sheet 1000, and the combination principle thereof remains unchanged, and therefore will not be exhaustively listed here.

The third structure of the negative electrode sheet 1000 (in which the insulation coating layer 130 is provided on both the non-tab area 113 and the negative active material layer 1200) corresponds to a combination of the first structure and the second structure of the negative electrode sheet 1000. Since the first structure and the second structure of the negative electrode sheet 1000 each include a plurality of examples, different third structures of the negative electrode sheet 1000 will be formed after the first structure and the second structure of the negative electrode sheet 1000 are combined.

For example, referring to FIG. 18, in some embodiments, the insulation coating layer 130 includes a ninth insulation layer 139 disposed on the negative active material layer 1200 and a tenth insulation layer 1310 disposed on the non-tab area 113.

The ninth insulation layer 139 includes a single insulation coating layer, or a plurality of insulation coating layers which are stacked together. When the ninth insulation layer 139 is formed by stacking a plurality of insulation coating layers, the plurality of insulation coating layers may be made of the same or different insulating materials.

The tenth insulation layer 1310 includes a single insulation coating layer, or a plurality of insulation coating layers which are stacked together. When the tenth insulation layer 1310 is formed by stacking a plurality of insulation coating layers, the plurality of insulation coating layers may be made of the same or different insulating materials.

In some embodiments, the insulation coating layer 130 may include an eleventh insulation layer 1311 disposed on a side surface of the negative electrode sheet 1000 away from the negative electrode tab 1110. The eleventh insulation layer 1311, in combination with the ninth insulation layer 139 and the tenth insulation layer 1310, covers a side of the negative electrode sheet 1000 away from the negative electrode tab 1110 to ensure insulation protection effect.

The specific structure and size parameters of the ninth insulation layer 139 may be referred to the configuration of the insulation coating layer 130 of the first structure of the negative electrode sheet 1000 described above, the specific structure and size parameters of the tenth insulation layer 1310 may be referred to the configuration of the insulation coating layer 130 of the second structure of the negative electrode sheet 1000 described above, and the specific structure and size parameters of the eleventh insulation layer 1311 may be referred to the configuration of the eighth insulation layer 138 described above, and details are not repeated herein.

It is to be understood that, since the third structure of the negative electrode sheet 1000 corresponds to a combination of the first structure and the second structure of the negative electrode sheet 1000, and the combination principle may be referred to the related description of the ninth insulation layer 139, the tenth insulation layer 1310, and the eleventh insulation layer 1311 in the foregoing, more combinations will not be exhaustively listed herein.

In the embodiments, regardless of the configuration of the insulation coating layer 130, the material of the insulation coating layer 130 may be selected to meet the requirements. For example, the material of the insulation coating layer 130 includes an inorganic material, an organic material, and a solvent.

The inorganic material includes at least one of boehmite, alumina, silica, hexagonal boron nitride, cubic boron nitride, silicon carbide, or silicon nitride.

The organic material has a monomer including at least one of vinylidene fluoride, tetrafluoroethylene, hexafluoropropylene, perfluoroethylene, alkyl ethers, ethylene, propylene, 1,3-butadiene, vinyl chloride, styrene, or vinyl acetate. Alternatively, the monomer includes at least one of acrylic acid, acrylate, acrylamide, N-vinylpyrrolidone, acrylonitrile, maleic acid, itaconic acid, maleimide, or bismaleimide. Alternatively, the monomer includes at least one of alkyd resins, epoxy resins, polyurethane, silicone resins, polyamide, polyarylamide, polyethylene terephthalate, polybutylene terephthalate, polyphenylene sulfide, polyphenylsulfone, polyethersulfone, polyetheretherketone, polyimide, polyamide-imide, polyetherimide, or polyester-imide. Alternatively, the monomer includes at least one of polyimide, polyamide-imide, polyetherimide or polyester-imide, polyvinylidene fluoride or polytetrafluoroethylene. The organic material has a weight average molecular weight of 20,000 to 1,000,000.

The solvent is a water-based solvent, such as deionized water, or an oil-based solvent, such as N-methylpyrrolidone (NMP), which is not limited thereto.

It is to be noted that for different types of the negative electrode sheet 1000, the materials of different insulation coating layers of the negative electrode sheets 1000 may be the same or different, as long as they meet the insulation protection requirements.. When different insulation coating layers have the same insulating material, one of the various materials described above or any combination thereof may be selected; and when different insulation coating layers are made of different insulating materials, two or more of the various materials described above or any combination thereof may be selected, which is not limited thereto.

According to the embodiments of the present disclosure, the negative electrode sheet 1000 may be used as the positive electrode sheet or the negative electrode sheet. For example, when the negative electrode sheet 1000 is used as the negative electrode sheet, the insulation coating layer 130 of the negative electrode sheet is in contact with the positive electrode sheet when swelling and protruding occur on the negative electrode sheet, avoiding the direct contact and short circuit between the positive electrode sheet and the negative electrode sheet, and improving the safety of the battery.

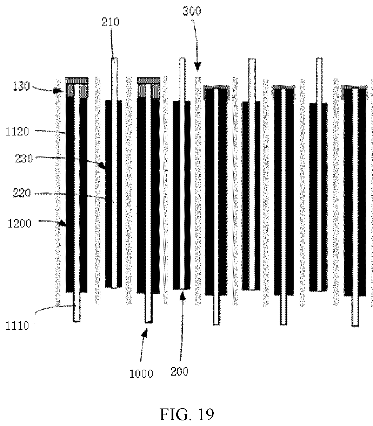

Referring to FIG. 19, embodiments of the present disclosure provide an electrode assembly including the positive electrode sheet 200, the separator 300, and the negative electrode sheet 1000.

The electrode assembly is a component of a battery in which chemical reactions occur. The electrode assembly is generally formed by winding or stacking the positive electrode sheet 200 and the negative electrode sheet 1000, and the separator 300 is generally provided between the positive electrode sheet 200 and the negative electrode sheet 1000. The positive coating area 220 is provided on the positive electrode sheet 200, and a negative coating area 1120 is correspondingly provided on the negative electrode sheet 1000. The positive coating area 220 and the negative coating area 1120 are coated with the positive active material layer 230 and the negative active material layer 1200. A portion of the positive electrode sheet 200 on which the positive active material layer 230 is provided and a portion of the negative electrode sheet 1000 on which the negative active material layer 1200 is provided constitute the main body of the electrode assembly. Portions of the positive electrode sheet 200 and the negative electrode sheet 1000 which are free of active material layer(s) are each provided with a tab, i.e. the positive electrode tab 210 and the negative electrode tab 1110, respectively.

Referring to FIG. 19, in the embodiments, the electrode assembly includes a plurality of positive electrode sheets 200 and a plurality of negative electrode sheets 1000, which are alternately provided. The separator 300 is provided between any one of the positive electrode sheets 200 and adjacent one of the negative electrode sheets 1000. For example, the any one of the positive electrode sheets 200 and the adjacent one of the negative electrode sheets 1000 are located on opposite sides of the separator 300, and each positive electrode tab 210 and each negative electrode tab 1110 may be located on opposite sides of the electrode assembly, respectively.

In the embodiments, in order to avoid the contact and short circuit between the positive electrode sheet 200 and the negative electrode sheet 1000, the width of the separator 300 is greater than or equal to the width of the negative coating area 1120, and the width of the negative coating area 1120 is greater than or equal to the width of the positive coating area 220, in which the term "width" refers to the dimension of a corresponding component in the second direction Y.

The insulation coating layer 130 is disposed on the non-tab area 113 of the negative electrode sheet 1000. The insulation coating layer 130 includes the first insulation layer 131 and the second insulation layer 132. The specific arrangements of the first insulation layer 131 and the second insulation layer 132 may refer to the foregoing description, and details are not repeated here.

In the electrode assembly, an edge of the first insulation layer 131 close to the negative coating area 1120 does not exceed the edge of the positive coating area 220 close to the positive electrode tab 210. That is, the edge of the first insulation layer 131 close to the negative coating area 1120 in the second direction Y corresponds to a section of the positive electrode sheet 200 where the positive electrode tab 210 is located, or partly corresponds to or does not correspond to a section where the positive coating area 220 is located.

An edge of the positive coating area 220 away from the positive electrode tab 210 does not exceed an edge of the negative coating area 122 close to the negative electrode tab 1110. That is, the edge of the positive coating area 220 away from the positive electrode tab 210 in the second direction Y corresponds to a section of the negative electrode sheet 1000 where the negative coating area 1120 is located, or partly corresponds to or does not correspond to a section where the negative electrode tab 1110 is located.

In this way, when the negative electrode sheet 1000 is swelled to puncture the separator 300, it is ensured that the insulation coating layer 130 on the non-tab area 113 is in contact with the positive electrode tab 210, preventing the positive electrode sheet 200 from being in direct contact with the negative electrode sheet, thereby avoiding the contact and short circuit between the positive electrode sheet 200 and the negative electrode sheet 1000, and improving safety.

It is to be noted that the negative electrode sheet 1000 in the embodiments has a plurality of different structural forms. For the different structural forms of the negative electrode sheet 1000, it is ensured that the width of the separator 300 is greater than or equal to that of the negative coating area 1120, and the width of the negative coating area 1120 is greater than or equal to that of the positive coating area 220. It can be understood that a projection of the negative coating area 1120 on the separator 300 coincides with or is within the range of the separator 300, and a projection of the positive coating area 220 on the negative coating area 1120 coincides with or is within the range of the negative coating area 1120. The edge of the insulation coating layer 130 close to the negative electrode tab 1110 does not exceed the edge of the positive coating area 220 close to the positive electrode tab 210, and the edge of the positive coating area 220 away from the positive electrode tab 210 does not exceed the edge of the negative coating area 1120 close to the negative electrode tab 1110.

Embodiments of the present disclosure provide a lithium ion battery including the electrode assembly. By applying the electrode assembly in the lithium ion battery, direct contact between the positive electrode sheet 200 and the negative electrode sheet 1000 is avoided in use of the battery, thereby avoiding the contact and short circuit, and improving safety of the battery.

In the embodiments, the lithium ion battery refers to a single physical module that includes one or more battery cells to provide high voltages and capacities. For example, the battery mentioned in the embodiments includes a battery module or a battery pack.

Each battery cell includes an electrode assembly composed of the positive electrode sheet 200, the negative electrode sheet 1000, and the separator 300, and an electrolyte. The battery cells primarily rely on the movement of metal ions between the positive electrode sheet 200 and the negative electrode sheet 1000.

The positive electrode sheet 200 includes a positive current collector and a positive active material layer 230 disposed on one or more surfaces of the positive current collector. A portion of the positive current collector that is not coated with the positive active material layer 230 protrudes with regard to a portion of the positive current collector that is coated with the positive active material layer 230. The portion of the positive current collector that is not coated with the positive active material layer 230 serves as the positive electrode tab 210. The material of the positive current collector includes aluminum, and the material of the positive active material layer 230 includes lithium cobaltate, lithium iron phosphate, lithium manganate, or a ternary or quaternary positive electrode active material formed of a lithium metal composite oxide having at least nickel (Ni), cobalt (Co), manganese (Mn) and/or aluminum (Al).

The negative electrode sheet 100 includes the negative current collector 1100 and the negative active material layer 1200 disposed on one or more surfaces of the negative current collector 1100. A portion of the negative current collector 1100 that is not coated with the negative active material layer 1200 protrudes with regard to a portion of the negative current collector 1100 that is coated with the negative active material layer 1200. The portion of the negative current collector 1100 that is not coated with the negative active material layer 1200 serves as the negative electrode tab 1110. The material of the negative current collector 1100 includes copper, and the material of the negative active material layer 1200 includes carbon or silicon.

To ensure that a high current is passed without fusing, a plurality of positive electrode tabs 210 are provided and stacked together, and a plurality of negative electrode tabs 1110 are provided and stacked together. The material of the separator 300 includes polypropylene (PP) or polyethylene (PE).

The battery cell further includes a housing, an electrode terminal and an adapter. The electrode assembly and the electrolyte are disposed in the housing, the electrode terminal is disposed on the housing, and the adapter connects the electrode terminal to the tabs of the electrode assembly. An insulating member is disposed between the adapter and the housing to insulate the adapter and the housing. The embodiments do not focus on the specific structure of the battery cell that belongs to the existing technology, which is not repeated herein.

## Claims

1. A electrode sheet, comprising:
a current collector, the current collector comprising a coating area, as well as a tab area and a non-tab area respectively disposed on opposite sides of the coating area; and
an active material layer disposed on the coating area;
wherein the non-tab area is coated with an insulation coating layer.

2. The electrode sheet according to claim 1, wherein a gap is provided between the insulation coating layer and the active material layer; or the insulation coating layer and the active material layer abut against each other.

3. The electrode sheet according to claim 1, wherein the insulation coating layer comprises a first insulation layer disposed on one side or on opposite sides of the current collector along a thickness direction of the current collector.

4. The electrode sheet according to claim 3, wherein the insulation coating layer comprises a second insulation layer disposed on a side of the non-tab area away from the active material layer, and together with the first insulation layer, covering an edge of the non-tab area away from the active material layer.

5. The electrode sheet according to claim 3 or 4, wherein a dimension of the first insulation layer along the thickness direction of the current collector is H3 that satisfies 0.1 µm≤H3≤H2; wherein H2 is a thickness of the active material layer.

6. The electrode sheet according to claim 3 or 4, wherein a dimension of the first insulation layer along a width direction of the current collector is W1 that satisfies 0.1 mm≤W1≤100 mm.

7. The electrode sheet according to claim 4, wherein a dimension of the second insulation layer along the thickness direction of the current collector is H4 that satisfies H1≤H4≤2*H3+H1; wherein H1 is a thickness of the current collector, and H3 is a thickness of the first insulation layer.

8. The electrode sheet according to claim 4, wherein a dimension of the second insulation layer along a width direction of the current collector is W2 that satisfies 0.1 µm≤W2≤5000 µm.

9. A negative electrode sheet, comprising:
a negative current collector, the negative current collector comprising a negative coating area and a negative electrode tab disposed on one side of the negative coating area; and
a negative active material layer disposed on the negative coating area;
wherein at least one insulation coating layer is disposed on a surface of the negative active material layer away from the negative current collector;
or, a non-tab area is disposed on a side of the negative current collector away from the negative electrode tab; at least one insulation coating layer is disposed on both the non-tab area and a surface of the negative active material layer away from the negative current collector.

10. The negative electrode sheet according to claim 9, wherein, in the non-tab area, a gap is disposed between the insulation coating layer and the negative active material layer; or, the insulation coating layer and a side of the negative active material layer away from the negative electrode tab abut against each other.

11. The negative electrode sheet according to claim 10, wherein in the non-tab area, the insulation coating layer comprises a first insulation layer disposed on one side or two opposite sides of the negative current collector along a thickness direction of the negative current collector.

12. The negative electrode sheet according to claim 11, wherein in the non-tab area, the insulation coating layer comprises a second insulation layer disposed on an end of the non-tab area away from the negative active material layer.

13. The negative electrode sheet according to claim 11 or 12, wherein dimensions of the first insulation layer along the thickness direction and a width direction of the negative current collector are H3 and W1 respectively that satisfy 0.1 µm≤H3≤H2 and 0.1 mm≤W1≤100 mm; wherein H2 is a thickness of the negative active material layer.

14. The negative electrode sheet according to claim 12, wherein a dimension of the second insulation layer along the thickness direction of the negative current collector is H4, and a dimension of the second insulation layer along a width direction of the negative current collector is W2, and the H4 and W2 satisfy H1≤H4≤2*H3+H1 and 0.1 µm≤W2≤5000 µm; wherein H1 is a thickness of the negative current collector, and H3 is a thickness of the first insulation layer.

15. The negative electrode sheet according to claim 9, wherein, on a surface of the negative active material layer, the insulation coating layer is disposed at an edge of the negative active material layer away from the negative electrode tab.

16. The negative electrode sheet according to claim 15, wherein, on the surface of the negative active material layer, the insulation coating layer comprises two third insulation layers respectively coated on opposite sides of the negative active material layer, and the two third insulation layers comprise the same insulating material.

17. The negative electrode sheet according to claim 15, wherein, on the surface of the negative active material layer, the insulation coating layer comprises:
a fourth insulation layer disposed on one side of the negative active material layer; and
a fifth insulation layer disposed on a side of the negative active material layer opposite to the fourth insulation layer;
wherein, the fourth insulation layer and the fifth insulation layer comprise different insulating materials.

18. The negative electrode sheet according to claim 15, wherein, on the surface of the negative active material layer, the insulation coating layer comprises a sixth insulation layer and a seventh insulation layer, respectively disposed on opposite sides of the negative active material layer; and the sixth insulation layer and the seventh insulation layer each comprise at least two layers made of different insulating materials.

19. The negative electrode sheet according to any one of claims 15 to 18, wherein, on the surface of the negative active material layer, the insulation coating layer comprises an eighth insulation layer disposed on an end of the negative electrode sheet away from the negative electrode tab.

20. The negative electrode sheet according to claim 17, wherein the insulation coating layer comprises:
a ninth insulation layer disposed on the negative active material layer; and
a tenth insulation layer disposed on the non-ear tab area;
wherein the ninth insulation layer and/or the tenth insulation layer comprises a single or multiple insulation layers, and when the ninth insulation layer and/or the tenth insulation layer comprises multiple insulation layers, each of the multiple insulation layers adopts the same or different insulating materials.

21. The negative electrode sheet according to claim 20, wherein the insulation coating layer comprises an eleventh insulation layer disposed on an end of the negative electrode sheet away from the negative electrode tab, and the eleventh insulation layer and the tenth insulation layer jointly cover a side of the negative electrode sheet away from the negative electrode tab.

22. An electrode assembly, comprising a positive electrode sheet, a separator and a negative electrode sheet, wherein the negative electrode sheet is the electrode sheet according to any one of claims 1 to 8, and the positive electrode sheet and the negative electrode sheet are respectively disposed on opposite sides of the separator.

23. The electrode assembly according to claim 22, wherein the positive electrode sheet is provided with a positive coating area and a positive electrode tab, the negative electrode sheet is provided with the negative coating area and a negative electrode tab, the negative coating area and the negative electrode tab respectively constitute the coating area and the tab area; a projection of the negative coating area on the separator coincides with the separator or is located within the separator, and a projection of the positive coating area on the negative coating area coincides with the negative coating area or is located within the negative coating area.

24. The electrode assembly according to claim 23, wherein the positive electrode tab and the negative electrode tab are respectively disposed on opposite sides of the electrode assembly, and an edge of the first insulation layer close to the negative coating area does not exceed an edge of the positive coating area close to the positive electrode tab, and an edge of the positive coating area away from the positive electrode tab does not exceed an edge of the negative coating area close to the tab area.

25. An electrode assembly, comprising a positive electrode sheet, a separator and the negative electrode sheet according to any one of claims 9 to 21, wherein the positive electrode sheet and the negative electrode sheet are respectively disposed on opposite sides of the separator.

26. An electrode assembly according to claim 25, wherein a positive coating area and a positive electrode tab are provided on the positive electrode sheet; a projection of the negative coating area on the separator coincides with the separator or is located within the separator, and an projection of the positive coating area on the negative coating area coincides with the negative coating area or is located within the negative coating area.

27. An electrode assembly according to claim 26, wherein the positive electrode tab and the negative electrode tab are respectively disposed on opposite sides of the electrode assembly, an edge of the insulation coating layer close to the negative electrode tab does not exceed an edge of the positive coating area close to the positive electrode tab, and an edge of the positive coating area away from the positive electrode tab does not exceed an edge of the negative coating area close to the negative electrode tab.

28. A lithium-ion battery, comprising the electrode assembly according to any one of claims 22 to 27.
